# EUROPEAN PATENT SPECIFICATION

(11) **EP 2 045 172 B1**
(45) Date of publication and mention of the grant of the patent: **30.12.2009**
(21) Application number: 07019250.5
(22) Date of filing: 01.10.2007
(51) Int. Cl.: B62D 25/12, E05D 11/06

(54) **Hood positioning structure of multi-purpose vehicle**
Haubenpositionierungsstruktur für Mehrzweckfahrzeuge
Structure de positionnement de capot d'un véhicule multi-usage

(43) Date of publication of application: 08.04.2009
(73) Proprietor: Kwang Yang Motor Co., Ltd., San-Min Dist., Kaohsiung City (TW)
(72) Inventor: Lin, Chuang-Shiung, Cambridge CB2 1FD (GB)
(74) Representative: Horak, Michael

(56) References cited:
- JP-A- 3 096 487
- US-A- 3 487 887
- US-A- 5 136 752
- US-A- 6 003 204

## Description

### BACKGROUND OF THE INVENTION

### (a) Technical Field of the Invention

The present invention relates to a hood positioning structure of a multi-purpose vehicle, and in particularly to a positioning structure that is coupled to a hood of a multi-purpose vehicle to ensure desired positioning of the hood when the hood is open.

### (b) Description of the Prior Art

In a traditional agricultural society, manpower has been playing an important role in carrying out agricultural operations, such as picking and culling, of for example tea leaves and fruit in the tea field or fruit field, application of pesticides, and sowing and harvest of crop fields. All of these jobs are done by manpower in the traditional society. With the development of technology and science, various agricultural machines were created to take part of the role of manpower. Thus, agriculture, which primitively supported the development of industry, is now getting further development with the aid of industrial technology. An example of the agricultural machines is a powered agricultural-purpose transportation cart. Since many fruit fields are located in mountainous area, the road or route for transportation of fruit is usually bumpy and rugged, as well as being narrow and constricted. This limits the use of regular-sized or large-sized truck, and because of the reason, specific-purpose power transportation cart or vehicle is developed for using in the mountainous area, such as the agricultural-purpose transportation cart.

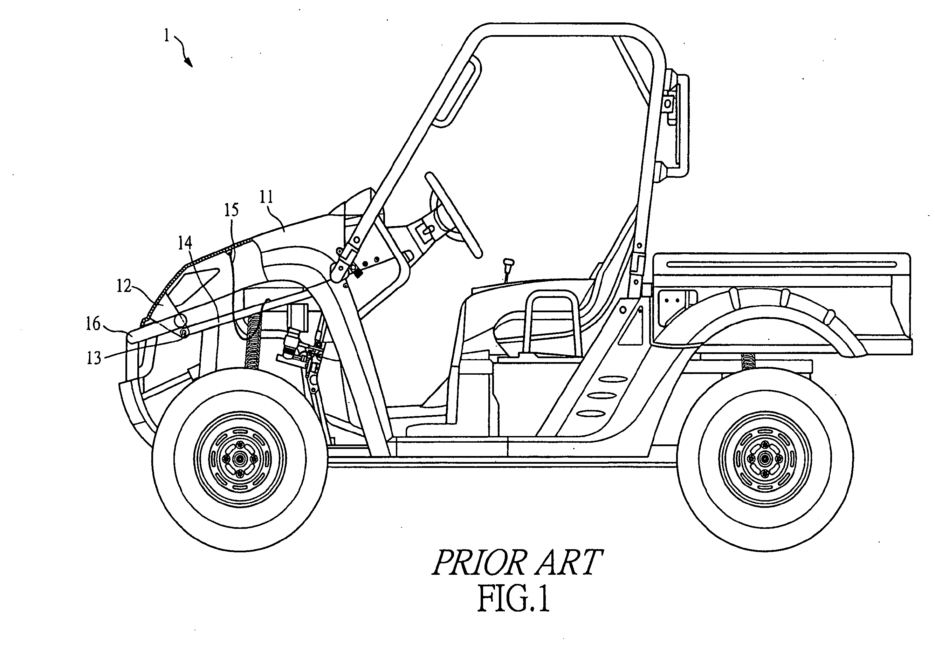

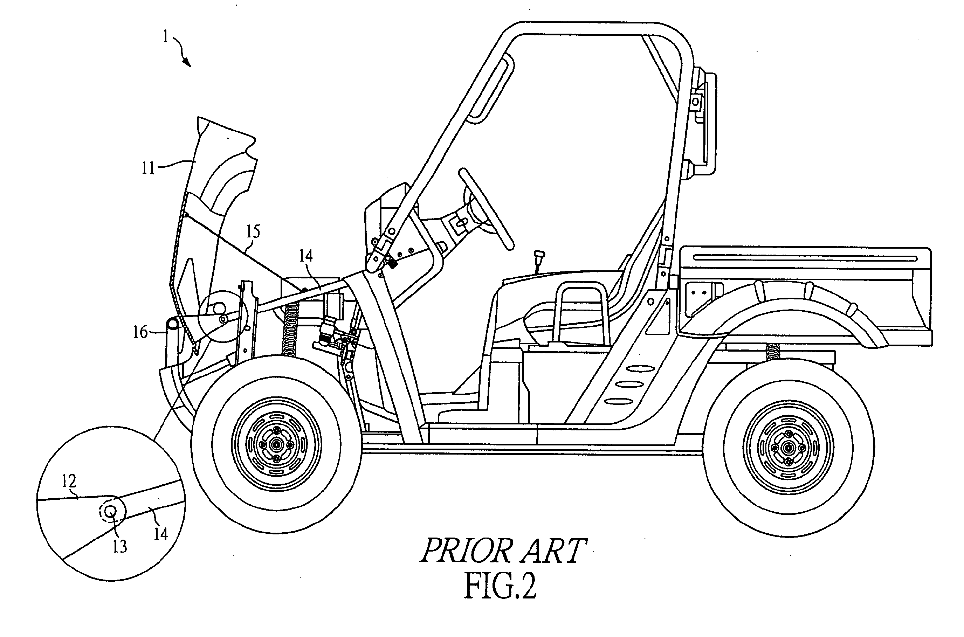

Figures 1 and 2 of the attached drawings illustrate an example of the conventional multi-purpose vehicle for agriculture, which is broadly designated at 1, comprising a hood 1 having an inside surface and a bracket 12 mounted to a front portion of an inside surface of the hood 11. The bracket 12 is pivotally connected to a chassis 14 of the vehicle 1 by a rotational shaft 13. To carry out maintenance of the vehicle 1, the hood 11 is lifted up to open and by such a lifting operation, the hood 11 is caused to rotate about the rotational shaft 13 to thereby open the hood 11. To avoid excessive or over-rotation of the hood 11 that may directly hit and thus damage or cause scratching on a bumper 16 of the vehicle 1, a cable 15 is arranged between the hood 11 and the chassis 14 by having opposite ends of the cable 15 respectively attached to the inside surface of the hood 11 and the chassis 14. The cable 15 has a predetermined length that sets a limit to the rotation angle, or angular displacement, of the hood 11. Document US 3,487,887 describes a similar hood positioning structure.

Although the cable 15 connected between the hood 11 and the chassis 14 effectively prevents over-rotation or excessive travel of the hood 11, which may cause damage to the bumper 16, the cable 15 may get slackened or loosened after long term use. In addition, the cable 15 is mounted to the chassis 14 and this causes, to some extents, interference with the operation of maintenance of the vehicle 1. Further, the arrangement of the cable 15 occupies a great amount of space after the hood 11 is open. Besides interfering with the maintenance or repairing of the vehicle 1, such an arrangement also influence full exploitation of the space under the hood 11.

In view of the problems caused by the cable 15 that is conventional used to connect the hood 11 of the vehicle 1 to the chassis 14, such as slackening and loosening, interference with vehicle maintenance and repairing, and preventing full use of the space under the hood, the present invention is aimed to provide a multi-purpose vehicle 1 of the previously described type that overcomes the drawbacks.

### SUMMARY OF THE INVENTION

The primary purpose of the present invention is to provide a multi-purpose vehicle that overcomes the drawbacks of the conventional multi-purpose vehicle that uses a cable to connect a hood to a chassis of the vehicle, including slackening and loosening of the cable, interference with vehicle maintenance and repairing and preventing full use of the space under the hood.

In accordance with an aspect of the present invention, there is provided a multi-purpose vehicle comprising a hood positioning structure, which comprises a crossbar and two brackets. The crossbar has opposite ends forming connection portions and a middle section forming a fixing seat, by which connection portions and fixing seat, the crossbar is fixed to a hood of the vehicle. Each bracket comprises a U-shaped channel member and is coupled to an end of the crossbar respectively. A free end of the bracket forms a notch that spaces side walls of the bracket to form a coupling portion and forms a stop. The coupling portion is pivotally connected to the chassis to allow the hood to be lifted up for opening and the hood is positioned by the stop of the bracket abutting a predetermined portion of the chassis to thereby set the hood in a stable open position for preventing the hood from undesirably hitting a bumper of the vehicle and eliminate undesired interference with access of a space between an open hood and the chassis to ensure easy maintenance and repairing of the vehicle.

Further, in accordance with another aspect of the present invention, a hood positioning structure is provided for a multi-purpose vehicle, wherein a storage bin is arranged in the space between the hood and the chassis to fully exploit the limited available in the vehicle.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Figure 1 is a side elevational view of a conventional multi-purpose vehicle with a hood closed;
Figure 2 is also a side elevational view of the conventional multi-purpose vehicle with the hood open;
Figure 3 is a side elevational view showing a multi-purpose vehicle constructed in accordance with the present invention;
Figure 4 is an exploded view of a hood positioning structure of the multi-purpose vehicle of the present invention;
Figure 5 is a side elevational view of the multi-purpose vehicle of the present invention with a hood opened;
Figure 6 is a perspective view, taken from an upper rear side, of a multi-purpose vehicle in accordance with another embodiment of the present invention, with a hood opened; and
Figure 7 is a side elevational view of the multi-purpose vehicle of said another embodiment of the present invention with the hood opened.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

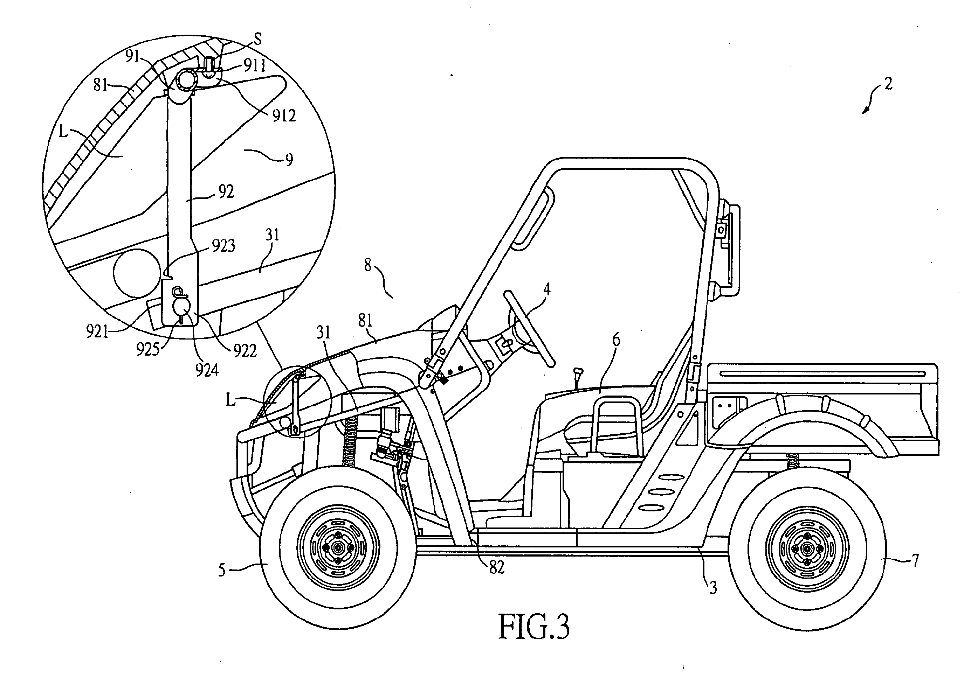

With reference to the drawings and in particular to Figure 3, a multi-purpose vehicle 2 constructed in accordance with the present invention comprises a chassis 3, a steering device 4, front wheels 5, a seat 6, rear wheels 7, a vehicle cover assembly 8, and a power unit (not shown) that provides mechanical power to the vehicle 2. The steering device 4 is rotatably mounted to the chassis 3. The front wheels 5 are arranged below the steering device 4. The seat 6 is mounted to the chassis 3 at a location behind the steering device 4. The power unit that is not shown in the drawings is arranged below the seat 6. The vehicle cover assembly 8 comprises a hood 81 that is arranged at a front portion of the vehicle 2 and side fenders 82 that are arranged below the steering device 4 and extend to opposite sides of the vehicle.

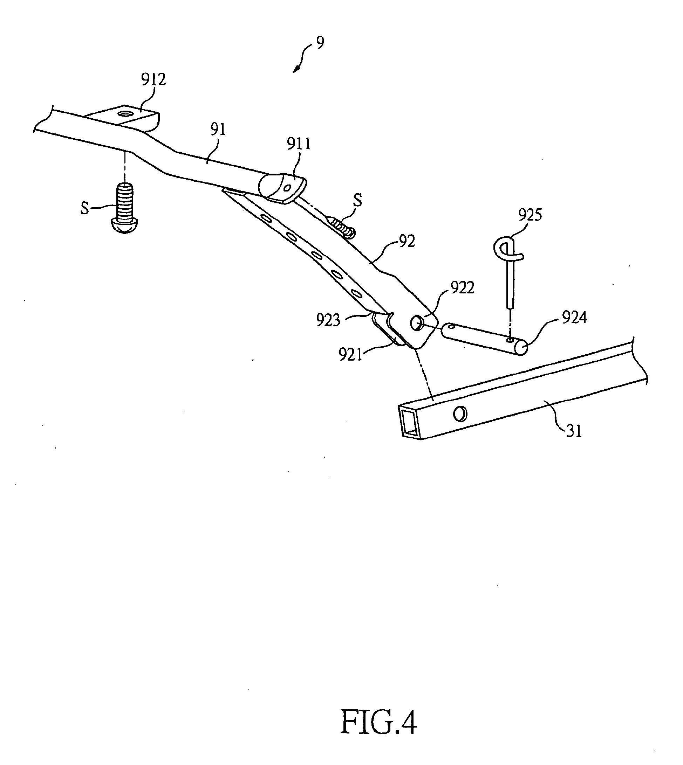

Also referring to Figure 4, the hood 81 of the vehicle 2 is coupled to the chassis 31 by a hood positioning structure 9. The positioning structure 9 comprises a crossbar 91 and two bracket bars 92. The crossbar 91 has two opposite ends each forming a connection portion 911 and a middle section between the ends and forming a fixing seat 912 that protrudes from the middle section. The connection portions 911 and the fixing seat 912 are secured to the hood 81 by means of bolts S. The bracket bars 92 are mounted to the crossbar 91 on opposite sides of the middle section of the crossbar 91 and each bracket bar 92 is formed of an elongated channel-like member having a U-shaped cross-section defined by a bottom and two side walls extending from the bottom. The bottom of the U-shaped cross-section of the bracket bar 92 forms a notch 921 of a predetermined depth in the length direction of the bracket bar 92. The notch 921 spaces portions of the side walls of the bracket bar 92, which correspond to the notch 921 of the bottom, from each other to form a coupling portion 922 for coupling with the chassis 31. A bottom of the notch 921 forms a stop 923. The coupling portion 922 that is formed by the spaced portions of the side walls of the bracket bar 92 is pivotally connected to the chassis 31 by a pivot 924 that extends through aligned holes (not labeled) defined in the portions of the side walls corresponding to the notch 921 of the bottom.

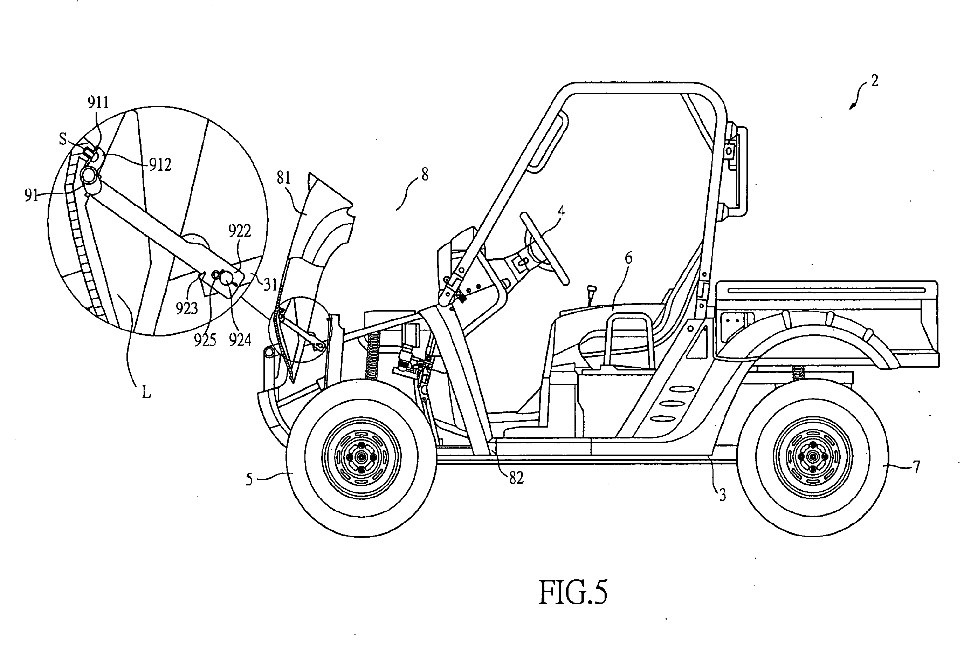

Also referring to Figure 5, in case that the hood 81 of the vehicle 2 of the present invention is to be lifted up for opening, due to the three fastening portions formed of the connection portions 911 at the ends of the crossbar 91 and the fixing seat 912 at the middle section of the crossbar 91, the hood 81 and the crossbar 91 of the positioning structure 9 are securely fixed together and are supported by the bracket bars 92 of the positioning structure 9. The coupling portions 922 of the bracket bars 92 and the pivots 924 arranged at the front portion of the chassis 31 together form a pivotal joint that provides a rotation center so that when the hood 81 is lifted up and rotated to a limit position where the stops 923 of the bracket bars 92 engage and abut against portions of the chassis 31, the maximum stroke of the hood 81 is set. As such, when the hood 81 is lifted to open, with the rotation of the hood 81 about the rotation center, the weight of a headlight assembly L is moved forward until the stops 923 abut against the portions of the chassis 31, where the hood 81 is kept in a force- and torque balanced condition and is thus maintained in a stable open position. Since the positioning structure 9 is set in the front portion of the chassis 31, interference similar to that associated with the conventionally used cable that was described previously will not occur so that maintenance and repairing of the vehicle 2 can be carried out without undesired interference.

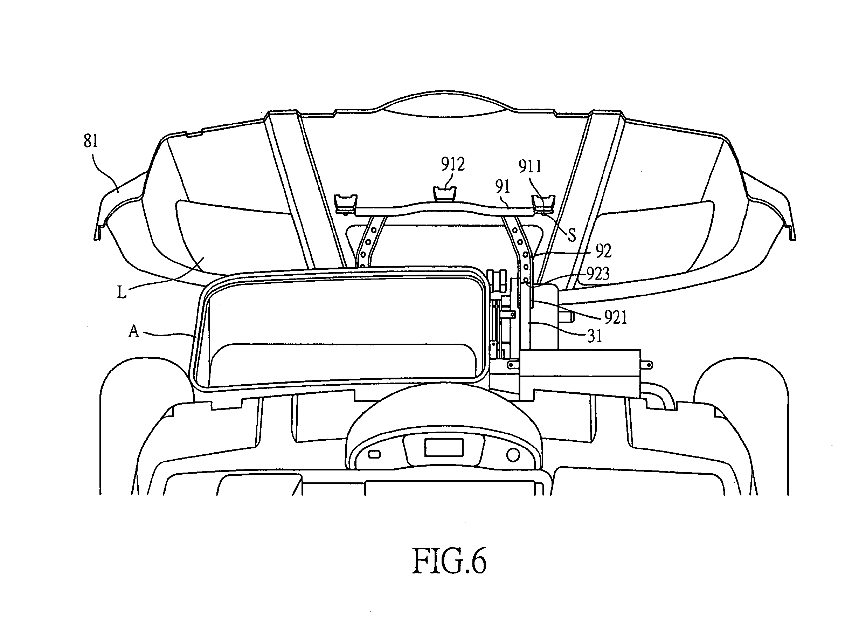

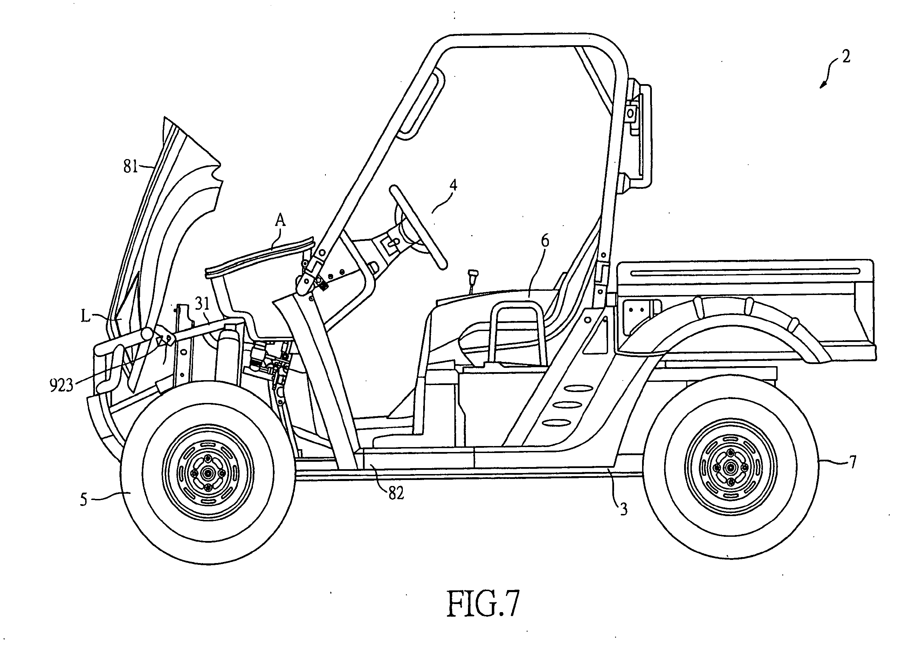

Also referring to Figures 6 and 7, since in a practical application, there is no interference caused by any member or parts similar to the conventional cable, it is possible to arranged a storage bin or box A in a space between the hood 81 of the vehicle 2 and the chassis 31. In this way, the space under the hood 81 can be fully exploited.

The effectiveness of the present invention resides in that the hood positioning mechanism 9 is arranged at a front portion of t chassis 31 and is fixed to the hood 81 so that when the hood 81 is open, stops 923 formed on brackets 92 may advantageously abut against predetermined portions of the chassis 3 to ensure stable and proper positioning of the hood 81 and undesired interference with the maintenance and repairing of the vehicle 2 is eliminated. Further, the space between the hood 81 of the vehicle 2 and the chassis 31 is fully utilized by providing a storage bin A in the space and located below the hood 81 when the hood 81 is closed.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the scope of the present invention as defined by the appended claims.

## Claims

1. A hood positioning structure (9) adapted to be used in a multi-purpose vehicle (2), the hood positioning structure being **characterized by** comprising:
a crossbar (91) mounted to an inside surface of a hood (11) of the vehicle (2); and
brackets (92) mounted to opposite ends of the crossbar (91), each bracket (92) forming a notch (921) at a distal free end thereof to form a stop inside said notch (921) and two
spaced portions of the notch (921) of the bracket that form a coupling portion;
wherein by mounting the crossbar (91) to the hood (91) of the vehicle (2) and with the coupling portion of each bracket (92) being pivotally connected to the chassis so that when the hood (11) is lifted up and opened, the stops (923) are engageable with corresponding portions of the chassis to set the hood (11) in a stable open position.

2. The hood positioning structure as claimed in Claim 1, wherein the ends of the crossbar (91) each form a coupling portion (922).

3. The hood positioning structure as claimed in Claim 1, wherein the crossbar (91) has a middle section on which a fixing seat (912) is formed.

4. The hood positioning structure as claimed in Claim 1, wherein each bracket (92) comprises a U-shaped channel-like member.

5. The hood positioning structure as claimed in Claim 1 further comprising a storage bin arranged between the hood and the chassis.

## Patentansprüche

1. Eine Haubenpositionierungsstruktur (9) für ein Mehrzweckfahrzeug (2), **gekennzeichnet durch** eine an der Innenseite der Haube (11) des Mehrzweckfahrzeugs (2) befestigte Querstrebe (91) und an beiden Enden der Querstrebe (91) angebrachte Beschläge (92), die jeweils am freien Ende eine Aussparung (921) haben, die einen Anschlag (923) bildet, sowie abgeteilte Abschnitte der Aussparungen (921) der Beschläge (92), die einen Kupplungsabschnitt bilden, wobei **durch** die an der Haube (11) angebrachte Querstrebe (91) und **dadurch**, daß die Kupplungsabschnitte der Beschläge (92) gelenkig mit dem Fahrzeugchassis verbunden sind beim Anheben der Haube (11) entsprechende Teile am Chassis in die Anschläge (923) eingreifen und die Haube (11) in ihrer Position halten.

2. Die Haubenpositionierungsstruktur aus Anspruch 1, bei der die Enden der Querstrebe (91) jeweils einen Kupplungsabschnitt (922) bilden.

3. Die Haubenpositionierungsstruktur aus Anspruch 1, bei der sich im Mittelabschnitt der Querstrebe (91) ein Befestigungssitz (912) befindet.

4. Die Haubenpositionierungsstruktur aus Anspruch 1, bei der jeder der Beschläge (92) einen U-förmigen Abschnitt hat.

5. Die Haubenpositionierungsstruktur aus Anspruch 1, bei der zusätzlich zwischen Haube und Fahrzeugchassis ein Staubehälter angebracht ist.

## Revendications

1. Une structure pour positionnement de hotte (1) adaptée pour une utilisation dans un véhicule à multiples buts (2), cette structure (1) comprenant:
- Une barre transversale (91) installée sur une surface intérieure de la hotte (1) dans le véhicule (2) et
- Des supports (92) installés sur des bouts opposés de la barre transversale (91), chaque support (92) formant un cran (921) sur un bout libre et ainsi formant un arrêt (2) et deux parties espacées du support (3) qui forme une partie de couplage; où l'on assemble la barre transversale (92) sur la hotte du véhicule avec la partie de couplage connectée en pivotant sur le châssis de telle sorte que lorsque la hotte (11) est élevée et ouverte, les arrêts (923) soient engageables avec les parties correspondantes sur le châssis pour placer la hotte (11) dans une position ouverte stable.

2. Structure pour positionnement de hotte comme indiquée dans la Revendication 1, où les bouts de la barre transversale (91) forment chacun une partie de couplage (922).

3. Structure pour positionnement de hotte comme indiquée dans la Revendication 1, où la barre transversale (91) a une section centrale sur laquelle est formé un siège de fixation (912).

4. Structure pour positionnement de hotte comme indiquée dans la Revendication 1, où chaque support (92) comprend un membre du genre chaîne en forme de U.

5. Structure pour positionnement de hotte comme indiquée dans la Revendication 1, comprenant un panier de stockage entre la hotte et le châssis.
